# EUROPÄISCHE PATENTSCHRIFT

(11) **EP 2 683 592 B1**
(45) Veröffentlichungstag und Bekanntmachung des Hinweises auf die Patenterteilung: **20.05.2015**
(21) Anmeldenummer: 12707600.8
(22) Anmeldetag: 07.03.2012
(51) Int. Cl.: B60R 19/54

(54) **KRAFTABLEITUNGSKOMPONENTE FÜR EIN KRAFTFAHRZEUG ZUM SCHUTZ VOR EINEM AUFSCHLAG EINER BORDSTEINKANTE AUF EINE UNTERSEITE DES KRAFTFAHRZEUGS**
FORCE-DEFLECTING COMPONENT FOR A MOTOR VEHICLE FOR PROTECTING AGAINST AN IMPACT OF A CURB EDGE AGAINST AN UNDERSIDE OF THE MOTOR VEHICLE
COMPOSANT DE DÉVIATION DE FORCE POUR VÉHICULE AUTOMOBILE DESTINÉ À PROTÉGER D'UN CHOC ENTRE UNE BORDURE DE TROTTOIR ET UN CÔTÉ INFÉRIEUR DU VÉHICULE AUTOMOBILE

(30) Priorität: 07.03.2011 DE 102011013269
(43) Veröffentlichungstag der Anmeldung: 15.01.2014
(73) Patentinhaber: Faurecia Exteriors GmbH, 31655 Stadthagen (DE)
(72) Erfinder: CLAPIE, Yann, 31655 Stadthagen (DE); EICHLINGER, Daniel, 31655 Stadthagen (DE)
(74) Vertreter: Tischner, Oliver
(86) Internationale Anmeldenummer: PCT/EP2012/053947
(87) Internationale Veröffentlichungsnummer: WO 2012/120061

(56) Entgegenhaltungen:
- DE-A1- 19 835 527
- FR-A1- 2 952 017
- JP-A- 2009 056 857

## Beschreibung

Die Erfindung betrifft eine Kraftableitungskomponente für ein Kraftfahrzeug zum Schutz vor einem Aufschlag einer Bordsteinkante auf eine Unterseite des Kraftfahrzeugs, sowie ein Kraftfahrzeug.

Im Falle einer "Bordsteinabfahrt" eines Kraftfahrzeugs verlassen z.B. die Vorderräder die Bordsteinkante, um dann schlagartig nach unten auf den Asphalt zu "fallen". Aufgrund der üblichen Federung des Kraftfahrzeugs wird als Resultat die Karosserie des Kraftfahrzeugs zunächst eine gewisse ruckartige Bewegung in Richtung der Bordsteinkante machen. Anschließend bringt die Federung wieder die Karosserie in ihre Ruhelage.

Aufgrund der ruckartigen Bewegung in Richtung der Bordsteinkante besteht die Gefahr, dass der Unterboden des Kraftfahrzeugs kurzzeitig auf die Bordsteinkante aufprallt, da der Abstand zwischen Bordsteinkante und Unterboden im Augenblick der ruckartigen Bewegung kleiner ist als in der Ruhelage.

Um Beschädigungen des Unterbodens des Kraftfahrzeugs bei der "Bordsteinabfahrt" zu vermeiden, können die dabei auftretenden Aufprallkräfte über spezielle Stahl- oder Aluminiumaufnahmen in die Längsträger des Kraftfahrzeugs geleitet werden. Dies erfordert jedoch einen hohen Materialaufwand seitens dieser Aufnahmen.

Die DE 198 35 527 A1 betrifft eine Schutzvorrichtung für Kraftfahrzeuge mit einem Deflektorschild zur Aufnahme von Stößen auf die Frontpartie der Fahrzeugkarosserie.

Der Erfindung liegt die Aufgabe zugrunde, eine verbesserte Kraftableitungskomponente für ein Kraftfahrzeug zum Schutz vor einem Aufschlag einer Bordsteinkante auf eine Unterseite des Kraftfahrzeugs, sowie ein Kraftfahrzeug zu schaffen.

Die der Erfindung zugrunde liegenden Aufgaben werden durch die Merkmale der unabhängigen Patentansprüche gelöst. Bevorzugte Ausführungsformen der Erfindung sind in den abhängigen Patentansprüchen angegeben.

Die Erfindung betrifft eine Kraftableitungskomponente für ein Kraftfahrzeug zum Schutz vor einem Aufschlag einer Bordsteinkante auf eine Unterseite des Kraftfahrzeugs, wobei die Komponente an der Unterseite des Kraftfahrzeugs in vertikaler Richtung des Kraftfahrzeugs an einem Kraftfahrzeuglängsträger anordenbar und in Kraftfahrzeuglängsrichtung durch eine mit der Karosserie des Kraftfahrzeugs verbundene Abstützung verbindbar ist, wobei die Komponente dazu ausgebildet ist, im Falle einer ruckartigen Bewegung der Bordsteinkante in Richtung der Unterseite des Kraftfahrzeugs eine Aufprallfläche bereitzustellen und auf die Aufprallfläche wirkende Kräfte vollständig aufzunehmen.

Ausführungsformen der Erfindung könnten den Vorteil haben, dass eine Beschädigung der Unterseite des Kraftfahrzeugs bei einer "Bordsteinabfahrt" vermieden wird. Durch die Verwendung der Kraftableitungskomponente werden etwaige auf die Unterseite des Kraftfahrzeugs wirkende Aufprallkräfte vollständig aufgenommen - eine ungewollte Beschädigung anderer Strukturbauteile des Kraftfahrzeugs wird vermieden. Da die Kraftableitungskomponente sowohl mit dem Kraftfahrzeuglängsträger, als auch mit der Abstützung verbunden ist wird eine optimale mechanische Stabilität gewährleistet. Die Abstützung verhindert ein "Wegknicken" oder "Umknicken" der Kraftableitungskomponente bei der Berührung mit der Bordsteinkante in Längsrichtung des Kraftfahrzeugs. Der Kraftfahrzeuglängsträger ist aufgrund seiner extrem hohen mechanischen Steifigkeit und Stabilität der optimale Angriffspunkt, um der Kraftableitungskomponente eine hohe mechanische Stabilität in vertikaler Richtung und Kraftfahrzeug-Querrichtung zu geben.

Nach der Erfindung ist die Komponente elastisch deformierbar. Damit können zum Einen die beim Aufprall wirkenden Kräfte gedämpft abgefangen werden, anstatt sie direkt auf die Karosserie weiterzuleiten. Zum Anderen ermöglicht dies, dass keine bleibenden Schäden aus der Bordsteinabfahrt resultieren. Vorzugsweise ist die Deformation der Kraftableitungskomponente nach Abschluss der Bordsteinabfahrt wieder vollständig reversibel. Etwaige bleibende Schäden werden vermieden.

Nach einer Ausführungsform der Erfindung weist die Aufprallfläche eine mäanderförmige Fläche auf. Dadurch kann ein insgesamt sehr hoher Flächenquerschnitt der Aufprallfläche bereitgestellt werden, wodurch die bei dem Aufprall wirkenden Kräfte großflächig aufgenommen und über die Kraftableitungskomponente verteilt werden können. Insgesamt wird dadurch der Materialaufwand der Kraftableitungskomponente minimiert bei Maximierung ihrer mechanischen Stabilität.

Nach einer Ausführungsform der Erfindung ist die Komponente behälterförmig, wobei der Behälter zumindest im Bereich der Aufprallfläche eine Rippenstruktur zur Kraftableitung aufweist. Damit ist insgesamt eine Gewichtsersparnis der Kraftableitungskomponente möglich, ohne jedoch auf eine hohe Gesamtstabilität verzichten zu müssen.

Es sei an dieser Stelle angemerkt, dass vorzugsweise die Kraftableitungskomponente in einem Spritzgussverfahren aus Kostengründen hergestellt werden kann. In diesem Fall wäre es unmöglich, aufgrund der behälterförmigen und damit geschlossenen Form der Kraftableitungskomponente eine geschlossene Aufprallfläche bereitzustellen. Die mäanderförmige Flächenform hingegen ermöglicht die Kombination der Herstellung im Spritzgussverfahren bei geschlossener Behälterform und Gewährleistung einer optimalen Möglichkeit zur Kraftaufnahme der Kraftableitungskomponente.

Nach einer Ausführungsform der Erfindung bestehen der Montageträger und/oder die Kraftableitungskomponente aus Kunststoff.

Nach einer Ausführungsform der Erfindung ist die Komponente Teil eines Montageträgers des Kraftfahrzeugs. Entweder sind die Komponente und der Montageträger einstückig ausgebildet oder aber die Komponente und der Montageträger bilden zwei Elemente, wobei die Kraftableitungskomponente an dem Montageträger über Befestigungsmittel fixierbar ist.

In einem weiteren Aspekt betrifft die Erfindung ein Kraftfahrzeug mit einer obig beschriebenen Kraftableitungskomponente.

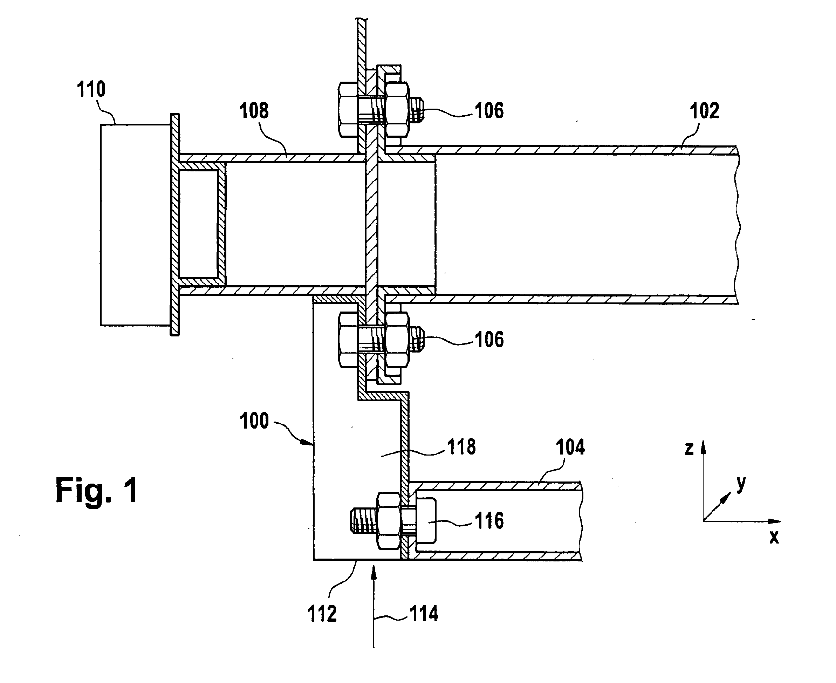

Im Folgenden werden bevorzugte Ausführungsformen der Erfindung anhand der Zeichnung Figur 1 näher erläutert.

Die Figur 1 zeigt eine Seitenansicht in x-z-Richtung eines Kraftfahrzeugs mit einem Kraftfahrzeuglängsträger 102. Der Träger 102 verläuft in x-Richtung. Im Rahmen der vorliegenden Erfindung wird unter der z-Richtung des Kraftfahrzeugs die Kraftfahrzeug-Vertikalrichtung, unter der y-Richtung die Kraftfahrzeug-Querrichtung und unter der x-Richtung die Kraftfahrzeug-Längsrichtung verstanden.

An dem Kraftfahrzeuglängsträger 102 ist ferner eine Crashbox 108 angeordnet, welche im Crashfall insbesondere in x-Richtung wirkende Kräfte aufnehmen kann. Ferner ersichtlich ist ein Biegeträger 110 des Kraftfahrzeugs.

An dem Kraftfahrzeuglängsträger 102 ist z.B. über eine Schraubverbindung 106 ein Montageträger 100 fixiert. Der Montageträger dient als Strukturbauteil des Kraftfahrzeugs, um im Crashfall z.B. Kotflügel und Längsträger 100 zusammenzuhalten. Ferner dient der Montageträger 100 dazu, als Anbauteil weitere Komponenten des Kraftfahrzeugs wie Scheinwerfer oder Schlösser aufzunehmen.

Der Montageträger 100 ist mit seinem dem Längsträger 102 abgewandten Ende mit einer Abstützung 104 fest verbunden. Die Abstützung 104 ist wiederum an der Karosserie des Kraftfahrzeugs gelagert und dient dazu, auf den Montageträger 100 in x-Richtung wirkende Kräfte aufzunehmen und eine Bewegung des Montageträgers 100 in x-Richtung zu verhindern. Nichtsdestotrotz kann die Abstützung 104 eine Bewegung in z-Richtung durchführen, wenn die Unterseite und Fläche 112 des Montageträgers 100 eine Bewegung in Richtung 114 erfährt.

Die Bewegung in Richtung 114 kann das Resultat einer Bordsteinabfahrt des Kraftfahrzeugs sein. In diesem Fall schlägt eine Bordsteinkante gegen die Fläche 112. Da der Montageträger 100 zumindest in seinem der Fläche 112 zugewandten Bereich elastisch deformierbar ist, wird die Fläche 112 bei der Bordsteinabfahrt eine Bewegung in Richtung 114 erfahren. Aufgrund der Kopplung des Montageträgers 100 mit der Abstützung 104 über das Befestigungsmittel 116 und der Beweglichkeit der Abstützung 104 in Richtung 114 wird auch die Abstützung 104 in Richtung 114 bewegt. Nichtsdestotrotz kann der Montageträger 100 beim Aufsetzen auf die Bordsteinkante aufgrund der Abstützung 104 nicht in x-Richtung wegbiegen oder ausweichen. Daher ist selbst im Falle der Bordsteinabfahrt eine hohe Stabilität der Unterseite des Kraftfahrzeugs gegeben.

Es sei an dieser Stelle angemerkt, dass die Fläche 112 einstückig mit dem Montageträger 100 ausgebildet sein kann. In diesem Fall ist die Fläche 112 Teil einer Kraftableitungskomponente, welche wiederum ein Teil oder Abschnitt des Montageträgers 100 selbst ist. Alternativ kann es sich bei der Kraftableitungskomponente um ein separates Teil handeln, welches an dem Montageträger fixiert ist. Der Montageträger 100 ist immer aus Kunststoff hergestellt, was das Fahrzeuggesamtgewicht reduziert. Die Fixierung kann im Falle des separaten Teils z.B. durch Anspritzen erfolgen. Möglich ist auch, dass der Montageträger 100 und die Kraftableitungskomponente zwei unterschiedliche Kunststoffmaterialien aufweisen, wobei z.B. das Material der Komponente mit der Fläche 112 eine besonders hohe reversible Deformierbarkeit aufweist, hingegen der Montageträger 100 selbst aus einem Material mit hoher Härte und Biegesteifigkeit besteht.

Allgemein ist die Herstellung des Montageträgers in Hybrid- oder Vollkunststofftechnologie möglich.

Um dem Montageträger 100 mit seiner Fläche 112 eine hohe mechanische Stabilität zu verleihen, weist der Montageträger in seinem Hohlraum 118 zumindest im Bereich der Fläche 112 eine Rippenstruktur zur Kraftableitung auf. Die Rippenstruktur ist in Figur 1 nicht ersichtlich, verläuft jedoch in vorzugsweise allen drei Dimensionen innerhalb des Montageträgers 100.

Ferner ist die Fläche 112 keine durchgängige, geschlossene Fläche, sondern die Fläche ist mäanderförmig in der x-y-Ebene. Vorzugsweise verlaufen die Schlangen der Mäanderform in y-Richtung, wodurch ein optimales Elastizitätsverhalten beim Aufprall der Fläche 112 auf eine Bordsteinkante gewährleistet ist. Insgesamt verleiht die Mäanderform der Fläche 112 einen hohen Flächenquerschnitt, so dass durch die "Bordsteinabfahrt" des Kraftfahrzeugs auf die Fläche 112 wirkende Kräfte optimal und vollständig durch den Montageträger 100 aufgenommen werden. Im Falle einer zweiteiligen Ausgestaltung des Montageträgers 100 mit einer Kraftableitungskomponente werden die auf die Fläche 112 wirkende Kräfte vollständig durch diese Kraftableitungskomponente aufgenommen.

Es sei angemerkt, dass im Rahmen der gesamten Beschreibung die Anordnung der Fläche 112 und damit allgemein der Kraftableitungskomponente so gewählt ist, dass bei Bordsteinabfahrt die Bordsteinkante ausschließlich im Bereich der Fläche 112 gegen die Unterseite des Kraftfahrzeugs schlägt. Dies kann auch im Falle einer Verblendung der Unterseite ein indirektes Aufschlagen der Bordsteinkante auf die Fläche 112 über die Verblendung sein. D.h., im Falle einer ruckartigen Bewegung der Bordsteinkante in Richtung der Unterseite des Kraftfahrzeugs findet eine etwaige Berührung der Bordsteinkante mit dem Kraftfahrzeug ausschließlich im Bereich der Kraftableitungskomponente statt, welche daraus resultierende und auf die Aufprallfläche wirkende Kräfte vollständig aufnimmt.

### Bezugszeichenliste

- 100: Kraftableitungskomponente
- 102: Längsträger
- 104: Abstützu ng
- 106: Befestigungsmittel
- 108: Crashbox
- 110: Biegequerträger
- 112: Aufprallfläche
- 114: Richtung
- 116: Befestigungsmittel
- 118: Hohlraum

## Patentansprüche

1. Kraftableitungskomponente (100) für ein Kraftfahrzeug zum Schutz vor einem Aufschlag einer Bordsteinkante auf eine Unterseite des Kraftfahrzeugs, wobei die Kraftableitungskomponente (100) an der Unterseite des Kraftfahrzeugs in vertikaler Richtung des Kraftfahrzeugs an einem Kraftfahrzeuglängsträger (102) anordenbar ist, wobei die Kraftableitungskomponente (100) dazu ausgebildet ist, im Falle einer ruckartigen Bewegung der Bordsteinkante in Richtung der Unterseite des Kraftfahrzeugs eine Aufprallfläche (112) bereitzustellen und auf die Aufprallfläche (112) wirkende Kräfte vollständig aufzunehmen, **dadurch gekennzeichnet, dass** die Kraftableitungskomponente (100) in Kraftfahrzeuglängsrichtung zur Verhinderung einer Bewegung der Kraftableitungskomponente (100) in der Kraftfahrzeuglängsrichtung durch eine mit der Karosserie des Kraftfahrzeugs verbundene Abstützung (104) verbindbar und in vertikaler Richtung des Kraftfahrzeugs elastisch deformierbar ist.

2. Kraftableitungskomponente (100) nach Anspruch 1, wobei die Aufprallfläche (112) eine mäanderförmige Fläche aufweist.

3. Kraftableitungskomponente (100) nach einem der vorigen Ansprüche, wobei die Kraftableitungskomponente (100) behälterförmig ist, wobei der Behälter zumindest im Bereich der Aufprallfläche (112) eine Rippenstruktur zur Kraftableitung aufweist.

4. Kraftableitungskomponente (100) nach einem der vorigen Ansprüche, wobei die Kraftableitungskomponente (100) Teil eines Montageträgers des Kraftfahrzeugs ist.

5. Kraftableitungskomponente (100) nach Anspruch 4, wobei die Kraftableitungskomponente (100) und der Montageträger einstückig ausgebildet sind.

6. Kraftableitungskomponente (100) nach Anspruch 4, wobei die Kraftableitungskomponente (100) an dem Montageträger über Befestigungsmittel fixierbar ist.

7. Kraftfahrzeug mit einer Kraftableitungskomponente (100) nach einem der vorigen Ansprüche.

8. Anordnung umfassend eine Kraftableitungskomponente (100) nach einem der Ansprüche 1 bis 6 und eine mit der Karosserie des Kraftfahrzeugs verbindbare Abstützung (104).

## Claims

1. A force diverting component (100) for a motor vehicle for protection against an impact of a curbside on a bottom of the motor vehicle, wherein the force diverting component (100) can be arranged on the bottom of the motor vehicle in the vertical direction of the motor vehicle on a motor vehicle longitudinal support (102), wherein the force diverting component (100) is designed to provide an impact area (112) in the event of a jerky movement of the curbside in the direction of the bottom of the motor vehicle and to completely absorb forces acting on the impact area (112), **characterized in that** the force diverting component (100) can be connected in the motor vehicle longitudinal direction for preventing a movement of the force diverting component (100) in the motor vehicle longitudinal direction by a support (104) connected to the body of the motor vehicle and can be elastically deformed in the vertical direction of the motor vehicle.

2. A force diverting component (100) according to claim 1, wherein the impact area (112) has a meandering surface.

3. A force diverting component (100) according to one of the preceding claims, wherein the force diverting component (100) is container-shaped, wherein the container has a rib structure for the force diversion at least in the area of the impact area (112).

4. A force diverting component (100) according to one of the preceding claims, wherein the force diverting component (100) is part of a mounting support of the motor vehicle.

5. A force diverting component (100) according to claim 4, wherein the force diverting component (100) and the mounting support are formed in one piece.

6. A force diverting component (100) according to claim 4, wherein the force diverting component (100) can be fixed on the mounting support by a fastening means.

7. A motor vehicle having a force diverting component (100) according to one of the preceding claims.

8. An arrangement comprising a force diverting component (100) according to one of claims 1 to 6 and a support (104) which can be connected to the body of the motor vehicle.

## Revendications

1. Composant de déviation de force (100) pour un véhicule automobile pour la protection contre un choc d'une bordure de trottoir sur le côté inférieur du véhicule automobile, le composant de déviation de force (100) pouvant être disposé sur le côté inférieur du véhicule automobile dans la direction verticale du véhicule automobile sur un longeron du véhicule (102), ce composant de déviation de force (100) étant conçu de façon à mettre à disposition, dans le cas d'un mouvement brusque de la bordure de trottoir en direction du côté inférieur du véhicule automobile, une surface d'impact (112) et à absorber complètement les forces exercées sur la surface d'impact (112), **caractérisé en ce que** le composant de déviation de force (100) peut être relié, dans la direction longitudinale du véhicule, pour empêcher un déplacement du composant de déviation de force (100) dans la direction longitudinale du véhicule, par l'intermédiaire d'un appui (104) relié à la carrosserie du véhicule et est déformable élastiquement dans la direction verticale du véhicule.

2. Composant de déviation de force (100) selon la revendication 1, la surface d'impact (112) présentant une surface à méandres.

3. Composant de déviation de force (100) selon l'une des revendications précédentes, le composant de déviation de force (100) présentant la forme d'un récipient, ce récipient présentant, au moins au niveau de la surface d'impact (112), une structure à nervures pour la déviation des forces.

4. Composant de déviation de force (100) selon l'une des revendications précédentes, le composant de déviation de force (100) faisant partie d'un support de montage du véhicule automobile.

5. Composant de déviation de force (100) selon l'une des revendications précédentes, le composant de déviation de force (100) et le support de montage étant réalisés d'une seule pièce.

6. Composant de déviation de force (100) selon la revendication 4, le composant de déviation de force (100) pouvant être fixé sur le support de montage par l'intermédiaire de moyens de fixation.

7. Véhicule automobile avec un composant de déviation de force (100) selon l'une des revendications précédentes.

8. Dispositif comprenant un composant de déviation de force (100) selon l'une des revendications 1 à 6 et un appui (104) pouvant être relié à la carrosserie du véhicule.
